(19) Europäisches Patentamt
European Patent Office
Office européen des brevets

(11) **EP 3 204 135 B1**

(12) **FASCICULE DE BREVET EUROPEEN**

(45) Date de publication et mention
de la délivrance du brevet:
**26.08.2020 Bulletin 2020/35**

(21) Numéro de dépôt: **15771651.5**

(22) Date de dépôt: **02.10.2015**

(51) Int Cl.:
*C02F 1/20* (2006.01)　　*C02F 1/66* (2006.01)
*C02F 101/16* (2006.01)　　*B01D 9/00* (2006.01)
*C02F 101/10* (2006.01)　　*C02F 1/52* (2006.01)

(86) Numéro de dépôt international:
**PCT/EP2015/072809**

(87) Numéro de publication internationale:
**WO 2016/055372 (14.04.2016 Gazette 2016/15)**

(54) **DISPOSITIF ET PROCÉDÉ DE RÉCUPÉRATION D'UN PRODUIT FINAL INORGANIQUE SOLIDE PRÉCIPITÉ CONSTITUÉ DE PHOSPHORE, D'AZOTE ET D'UN ÉLÉMENT X**

**VORRICHTUNG UND VERFAHREN ZUR RÜCKGEWINNUNG EINES GEFÄLLTEN FESTEN ANORGANISCHEN ENDPRODUKTS MIT PHOSPHOR, STICKSTOFF UND ELEMENT X**

**DEVICE AND METHOD FOR RECOVERING A PRECIPITATED SOLID INORGANIC FINAL PRODUCT CONSISTING OF PHOSPHORUS, NITROGEN AND AN ELEMENT X**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.10.2014 LU 92566**

(43) Date de publication de la demande:
**16.08.2017 Bulletin 2017/33**

(73) Titulaire: **Trouve, Emmanuel**
**34270 Vacquières (FR)**

(72) Inventeur: **MOLLES, Guilhem**
**F-34000 Montpellier (FR)**

(74) Mandataire: **Dennemeyer & Associates S.A.**
**Postfach 70 04 25**
**81304 München (DE)**

(56) Documents cités:
**EP-A1- 1 435 259　　WO-A1-2012/134255**

**Description**

La présente invention concerne un dispositif de récupération d'un produit final inorganique solide précipité gros et sec constitué de phosphore, d'azote et d'un élément X selon la revendication 1 et un procédé de récupération d'un produit final inorganique solide précipité constitué de phosphore, d'azote et d'un élément X selon la revendication 19. Le domaine d'application est la récupération de phosphore à partir de fluides issus de tout type de processus anaérobies ou anoxiques, tels que fermentation, digestion, méthanisation, biodégradation, dénitrification et traitement d'eaux usées.

Les procédés de récupération de phosphore, notamment sous forme de MAP (Magnésium Ammonium Phosphate) se développent depuis les trente dernières années. La voie physico-chimique (cristallisation, précipitation) s'est imposée comme la plus efficace et fiable, mais son développement bute aujourd'hui sur sa non-rentabilité lorsque le gisement de Phosphore (eaux usées, jus et moûts de fermentation) n'excède pas 150 - 200 kg Phosphore/jour. La majorité des gisements de phosphore n'excèdent pas ce flux, et malgré les nombreux développements récents, les technologies proposées, basées sur le principe des réacteurs colonnes à lit fluidisé, ne permettent pas d'atteindre une rentabilité économique pour les unités de moyenne et petite taille. Par exemple, il n'existe pas de dispositif rentable pour récupérer le phosphore des eaux usées d'une ville de 100 000 habitants. Les principaux facteurs externes pesant sur la rentabilité des systèmes actuels de récupération du phosphore sont la compétition des bas prix des phosphates miniers d'une part, et l'incertitude quant au « Pic des ressources en phosphates » d'autre part (Travaux universitaires de Dana Cordell, estimation de la date du pic variant de 2030 à 2400) : sans rupture technologique, un accroissement de la viabilité économique de la récupération du phosphore ne peut être espéré dans un avenir proche. Les principaux facteurs intrinsèques de non-rentabilité des dispositifs actuels de récupération du phosphore sont d'une part leur dimension importante (réacteurs de grande hauteur) qui génère des investissements lourds (hangars, génie civil, gros équipements), et d'autre part le caractère peu intensif des procédés mis en œuvre (les temps de séjours sont limités, donc les particules précipitées n'ont qu'une taille réduite, et la consommation de réactifs requise est élevée).

De l'état de la technique il est connu:

RIM NUT - technique d'échange d'ions (Italie): afin d'extraire le phosphore des fluides urbains méthanisés, le principe d'extraction des MAP (Magnésium, Ammonium, Phosphate) est basé sur un échange d'ions préalables à un ajout de NaCl, HPO4, MgCl et NaOH. La complexification du procédé permettrait d'améliorer les rendements et de réduire les dimensions. Cependant l'unité n'a jamais été commercialisée pour les industriels.

Phosphorus Recovery - Fraunhofer (Allemagne): le procédé de Fraunhofer est basé sur l'échange électrolytique via des électrodes immergées dans la solution. L'unité est conteneurisable et adaptée aux petits débits. A l'heure actuelle l'unité est en phase de test et n'est pas commercialisée.

EP 2511243 (NURESYS) concerne un procédé de récupération de phosphore à partir d'eaux usées en améliorant la réaction de précipitation par ensemencement préalable avec des particules de silicate de calcium hydraté.

Rem Nut Ion Exchange Plus Struvite Précipitation Process, Lorenzo Liberti, department of Civil and Environmental Engineering, Polytechnic University of Bari, divulgue un procédé permettant une élimination simultanée d'ions phosphate et d'ions ammonium.

US 20120261338 A1 concerne un procédé de traitement d'eaux usées par précipitation de struvite.

US 2013/0220919 A1 divulgue un procédé de récupération de sels de phosphate à partir d'un liquide dans un réacteur.

WO 2012134255 A1 décrit un procédé et un appareil pour l'élimination du phosphore et/ou l'élimination de l'ammonium des rejets liquides des unités de production d'engrais par récupération de cristaux de phosphate.

Diverses solutions ont été envisagées par le passé:

- certains fabricants ont mis en place une recirculation du magnésium non consommé pour réduire les coûts de réactifs, avec une légère réduction de la taille du réacteur (environ 10%). Le coût d'investissement n'est pas amélioré, le surcoût du dispositif de recyclage de réactif n'étant pas compensé par la faible réduction de la taille du réacteur.
- la technologie RIM NUT, basée sur l'échange d'ions par zéolithe, n'évite pas l'emploi de magnésium, et l'amélioration espérée de l'encombrement et donc du coût d'investissement n'a pas pu être confirmée à pleine échelle, du fait de l'ajout du dispositif d'échange d'ions préalable à l'étape d'extraction.
- la société Ostara ensemence son réacteur par de fines particules de struvite pour accélérer la formation de grains de struvite de taille plus importante.

- le centre de recherche Fraunhofer tente, à l'échelle du laboratoire, une approche électrolytique pour faire migrer les ions vers une zone spécifique de formation de la struvite: les conséquences en termes d'encombrement et de coût d'investissement ne peuvent pas encore être estimés avec une précision raisonnable.

Aucun de ces dispositifs n'a permis d'atteindre la rentabilité économique pour de petites et moyennes capacités.

## Résumé de l'invention:

Le dispositif de récupération d'un produit final inorganique solide précipité constitué de phosphore, d'azote et d'un élément X de la présente invention est défini à la revendication 1 et le procédé de récupération d'un produit final inorganique solide précipité constitué de phosphore, d'azote et d'un élément X de la présente invention est défini à la revendication 19.

L'art antérieur le plus proche est WO 2012134255 car il décrit un dispositif et un procédé pour la déphosphoration et/ou l'élimination de l'ammonium des fluides liquides bruts des installations de production d'engrais par précipitation du phosphore, d'azote et du magnésium sous forme de cristal à valeur ajoutée. Ce dispositif possède un processus d'injection des fluides par le fond du réacteur.

La différence entre l'art antérieur le plus proche et la présente invention correspond à la combinaison des caractéristiques mentionnées dans les revendications indépendantes. L'effet technique apporté par cette différence est de fournir un rendement amélioré en cristaux du produit final grâce à une taille améliorée en raison d'un temps de séjour plus long dans les réacteurs, mais aussi de fournir une vitesse améliorée de décantation/précipitation des cristaux du produit final, avec une consommation modérée de réactifs. En effet, WO 2012/134255 (cf page 8) nous enseigne que la taille des cristaux du produit final est de 1,25 mm +/- 0,25 mm alors que la taille des cristaux du produit final de la présente invention est comprise entre 1mm et 10mm.

Le problème objectif à résoudre par la présente invention est de trouver un dispositif alternatif capable de fournir un rendement amélioré tout en maintenant le dispositif à une dimension raisonnable (hauteur : 2 à 3 mètres) et ayant une forme optimale pour récupérer un produit final inorganique solide précipité constitué de phosphore, d'azote et d'un élément X ayant une taille améliorée.

Aucun dispositif de l'art antérieur ne propose un second réacteur de cristallisation secondaire-décantation de forme spiralée directement relié à un premier réacteur de réaction-cristallisation primaire, ledit second réacteur possédant :

- un angle d'inclinaison des spires compris entre 10° et 70° par apport à un axe sensiblement perpendiculaire (+/- 10%) à l'axe vertical passant par le centre du diamètre constitué par les spires des conduits dudit au-moins un réacteur spiralé et,
- une vitesse ascensionnelle dans le réacteur du premier fluide mélangé audit second fluide comprise entre 0,01 m/s et 3 m/s.

La solution proposée par la présente invention est l'utilisation d'un second réacteur de cristallisation secondaire-décantation spiralé relié au premier réacteur, permettant d'augmenter la taille des cristaux du produit final, d'augmenter fortement la vitesse de décantation, de réduire les quantités de réactifs nécessaires, et d'augmenter le volume du réacteur tout en diminuant le volume global de l'unité. Les dimensions du dispositif de la présente invention sont réduites d'environ 30% à 70% par rapport aux dispositifs connus. L'homme du métier n'aurait eu aucune incitation sérieuse à partir de l'art antérieur pour arriver au dispositif et au procédé de la présente invention car WO 2012/134255 n'enseigne pas l'utilisation d'un second réacteur de cristallisation secondaire-décantation de forme en spirale relié à un premier réacteur mais par contre WO 2012/134255 (cf page 8) nous enseigne que la taille des cristaux du produit final est de 1,25 mm +/- 0,25 mm alors que la taille des cristaux du produit final de la présente invention est comprise entre 1mm et 10mm, de préférence entre 5mm et 6mm ce qui prouve bien que la présente invention utilise des moyens techniques nouveaux et inventifs.

La réaction de la présente invention se produisant dans le premier réacteur (19) de réaction-cristallisation primaire et dans le second réacteur spiralé (20) de cristallisation secondaire-décantation peut être décrite comme suit :

$$NH_4^+PO_4^{3-}\ Y + X^{2+} \xrightarrow[\text{injection gaz}]{T°>50°C, PH>8, NaOH} NH_4PO_4X\ +\ Y$$

$NH_4^+PO_4^{3-}$  Y étant le premier fluide (1), càd un fluide phosphoré et azoté issu de tout type de processus anaérobie ou anoxique,

$X^{2+}$  étant le second fluide (2) choisi parmi $Be^{2+}, Mg^{2+}, Ca^{2+}, Sr^{2+}, Ba^{2+}, Ra^{2+}\ Cd^{2+}, Cr^{2+}, Co^{2+}, Cu^{2+}, Eu^{2+}, Ge^{2+}, Fe^{2+}, Pb^{2+}, Mn^{2+}, Ni^{2+}, Pt^{2+}, Sn^{2+}, V^{2+}, Zn^{2+}, Ti^{2+}, Si^{2+}, Po^{2+}, Hg^{2+}, Yb^{2+}, Sm^{2+}, Md^{2+}, No^{2+}$

$NH_4PO_4X$ étant le produit final (3) inorganique solide précipité constitué de phosphore, d'azote et d'un élément X, (des traces de substances organiques peuvent subsister) néanmoins $NH_4PO_4X$ possède une pureté de 80%, 90%, 95%, 96%, 97%, 98%, 99%, 99,5%, voire 99,9%.

Y étant le reliquat secondaire (6B), pauvre en phosphore-azote càd toute substance chimique autre que $NH_4PO_4X$, issu de tout type de processus anaérobie ou anoxique, devant être évacué. Y peut comprendre des substances organiques et inorganiques.

L'invention se présente sous la forme d'un module d'une géométrie compacte qui est associé à une unité d'extraction d'eau. Les températures préalablement élevées pour l'unité d'extraction d'eau permettent de travailler avec les bénéfices d'un fluide chaud, et la récupération d'un ciel gazeux déjà évacué permet d'augmenter le pH du fluide par effet de stripping du $CO_2$.

L'originalité de la présente invention est qu'elle conjugue à la fois :

- une extraction de MAP (Magnésium Ammonium Phosphate) à haute température (supérieure ou égale à 20°C, ou 50°C, ou 70°C jusqu'à 90°C), issue d'une récupération de chaleur. La température modifie les caractéristiques physiques de l'eau (viscosité) et améliore les conditions de précipitation et de cristallisation des MAP.
- un abandon des géométries de réacteurs linéaires verticaux pour une utilisation de décanteurs spiralés et multi spiralés. Le module de décantation spiralé offre des volumes de décantation considérables avec une occupation de l'espace réduite. La forme spiralée du décanteur permet une ségrégation naturelle des particules importantes vers le bas du module et l'air du blower conserve les fines particules en suspension qui vont permettre d'ensemencer le fluide. Le temps de séjour est augmenté grâce à l'utilisation d'un second réacteur (20) spiralé relié au premier réacteur (19).
- un flux de gaz récupéré sur une unité d'extraction des eaux depuis le substrat de méthanisation est réinjecté dans la partie basse du décanteur spiralé.

Le fluide à traiter dont il est question dans la présente invention est un fluide issu :

- de la méthanisation d'un substrat, idéalement végétal, dont le temps de séjour peut varier de 5 à 50 jours, idéalement de 30 à 35 jours, plus idéalement de 15 à 20 jours.
- de la clarification par un système de préfiltration dont le seuil de coupure se situe entre 50 et 1000 $\mu$m, idéalement de 200 à 300 $\mu$m, plus idéalement de 150 à 250 $\mu$m (clarifié),
- de la partie retenue d'une nano-filtration par membrane de ce même jus (concentré en Phosphore, Magnésium et en Azote),
- d'un échange de chaleur avec le réseau d'eau chaude du site de méthanisation montant la température du fluide de 20°C à 90°C, idéalement 70 °C.

Les dimensions de l'unité sont réduites de 30% à 70 % par rapport aux unités connues. Le dispositif de la présente invention ne nécessite pas de travaux de génie civil, et il est transportable de manière couchée dans un container de 20 pieds.

La présente invention est accompagnée des figures suivantes :

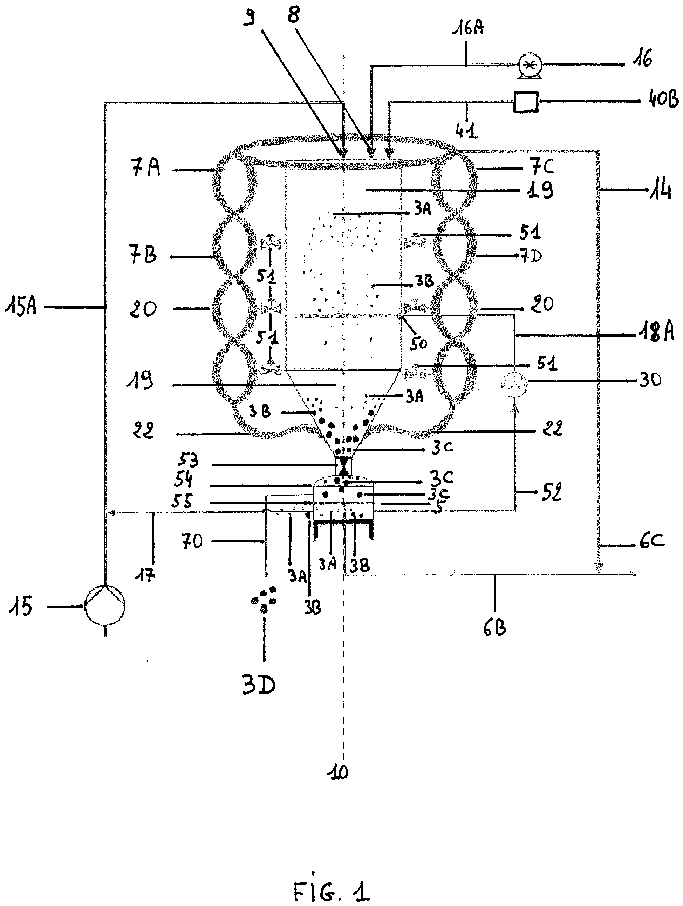

Figure 1 : schéma d'ensemble du dispositif de la présente invention montrant un axe sensiblement vertical (10)

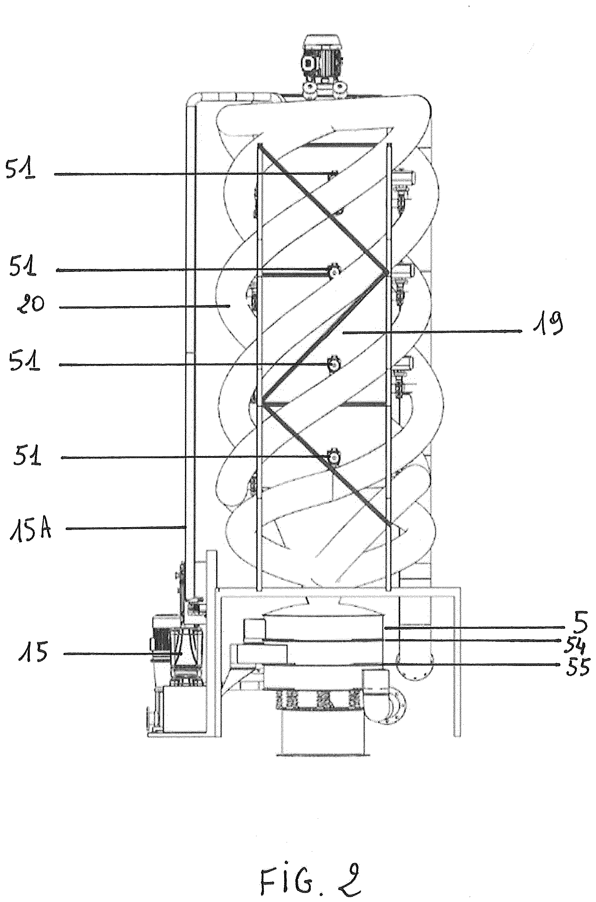

Figure 2 : vue de gauche du dispositif de la présente invention

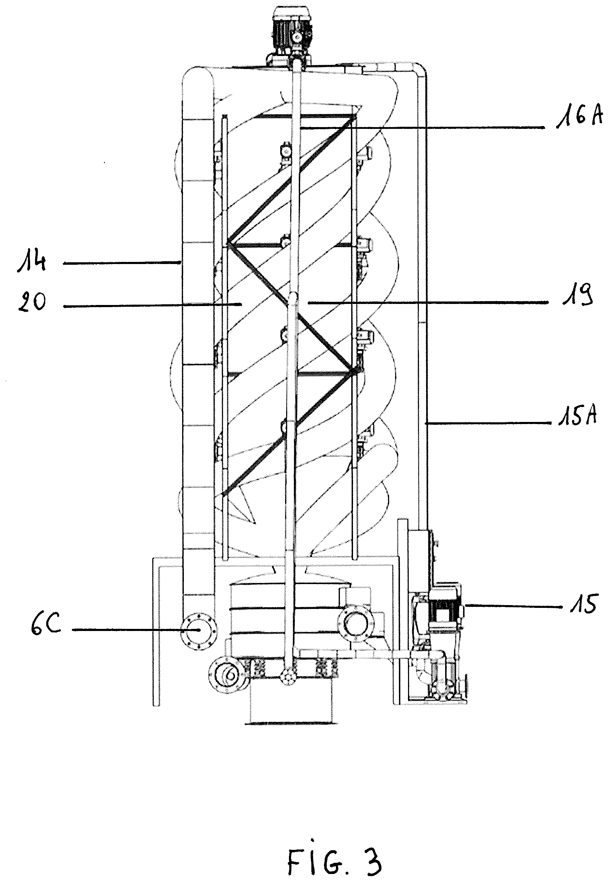

Figure 3 : vue de droite du dispositif de la présente invention

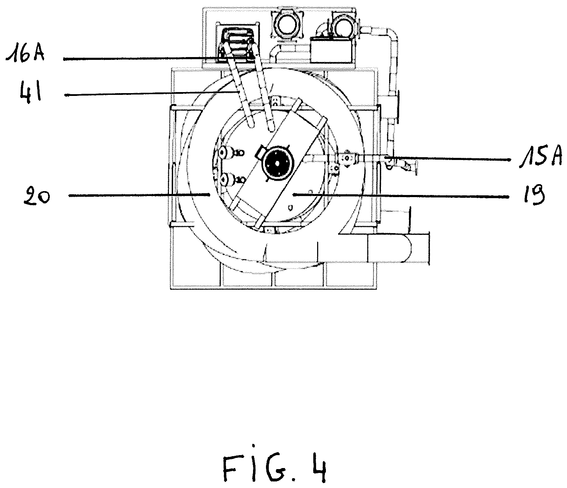

Figure 4 : vue de dessus du dispositif de la présente invention

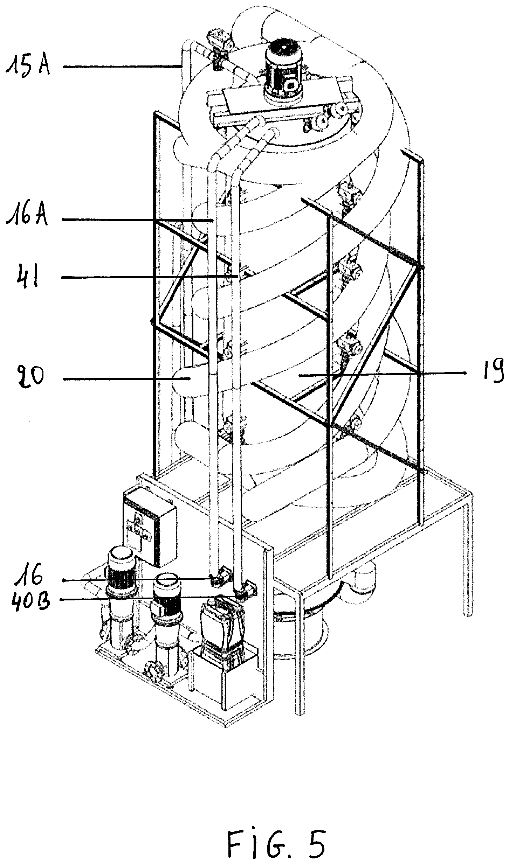

Figure 5 : vue en perspective du dispositif de la présente invention

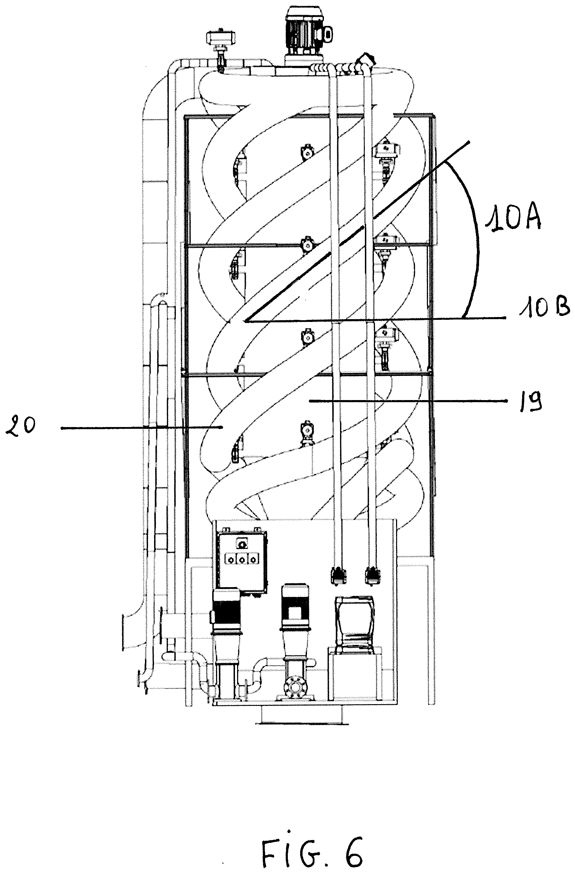

Figure 6 : vue de face du dispositif de la présente invention montrant un axe (10B) sensiblement horizontal et un angle d'inclinaison (10A) d'une spire (4).

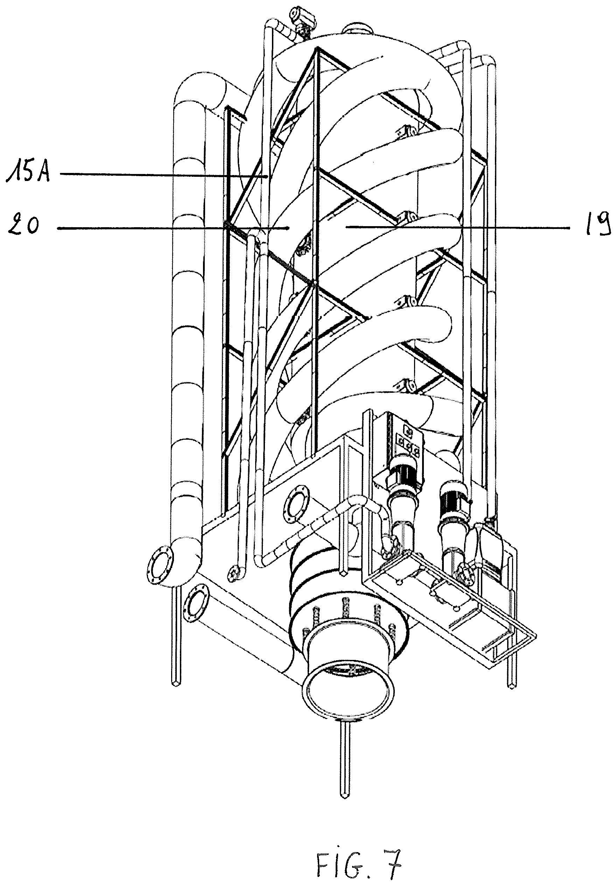

Figure 7 : vue en perspective du dessous du dispositif de la présente invention

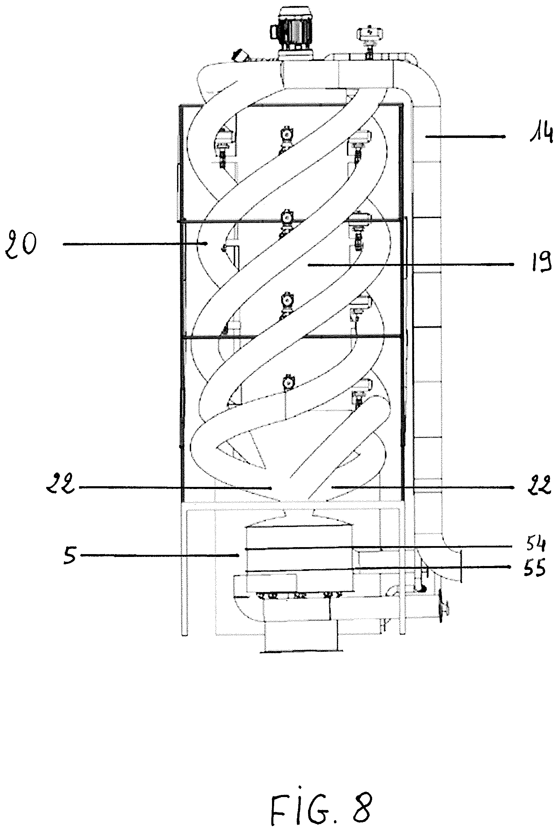

Figure 8 : vue de l'arrière du dispositif de la présente invention

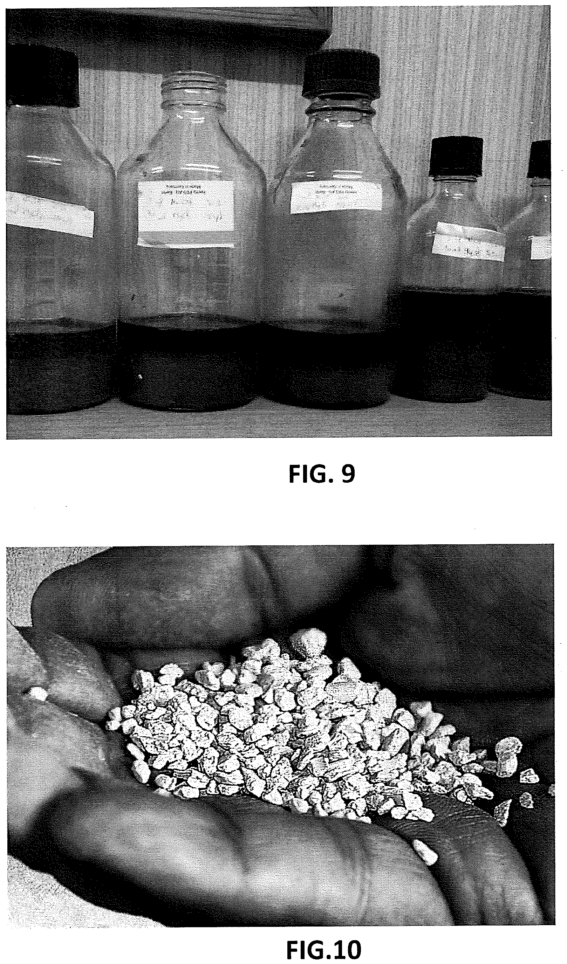

Figure 9 : pour s'assurer du bon dosage des réactifs, et donc une maximalisation du rendement économique des tests de laboratoire ou de terrain doivent être effectués. Ces tests (ici sous la forme d'un Jar-test) permettent de définir la quantité optimale de soude (NaOH) et de magnésium (MgCl ou MgO) qui doit être ajoutée.

Figure 10 : montre $NH_4PO_4X$ sec, càd des cristaux du produit final (3) inorganique solide précipité constitué de phosphore, d'azote et d'un élément X.

La présente invention concerne un dispositif de récupération d'un produit final inorganique solide précipité gros et sec (3D) constitué de phosphore, d'azote et d'un élément X choisi parmi les métaux alcalino-terreux Be,Mg,Ca,Sr,Ba,Ra, formé à partir d'un premier fluide (1) phosphoré et azoté mélangé à un second fluide (2) constitué d'au moins un cation divalent $X^{2+}$ choisi parmi $Be^{2+},Mg^{2+},Ca^{2+},Sr^{2+},Ba^{2+},Ra^{2+}$,
ledit dispositif comprenant les moyens suivants:

- au moins un premier réacteur (19) de réaction-cristallisation primaire,
- au moins un appareil (5) de séparation de particules et d'évacuation du reliquat secondaire (6B),
- au moins un appareil d'ajustage du PH (40B),
- au moins un appareil d'injection (30) d'un gaz (18),
- au moins un appareil d'amenée (15) du premier fluide (1),
- au moins un appareil d'amenée (16) du second fluide (2),

caractérisé en ce que ledit dispositif comprend au moins un second réacteur (20) de cristallisation secondaire-décantation ayant une forme géométrique spiralée, ledit second réacteur (20) étant relié directement audit premier réacteur (19) par au moins une vanne (51) permettant au lit réactionnel du premier réacteur (19), contenant un produit inorganique solide petit (3A) et intermédiaire (3B) grossissant progressivement, d'être transféré dans le réacteur (20) pour y effectuer une cristallisation secondaire avant de précipiter pour obtenir un produit final inorganique solide précipité mouillé et gros (3C).
Le dispositif selon la présente invention possède au moins un canal d'amorçage (17), contenant ledit produit inorganique solide petit (3A) et intermédiaire (3B), reliant ledit appareil (5) de séparation de particules et d'évacuation du reliquat secondaire (6B) à au moins un conduit d'injection (15A) du premier fluide (1) dans le premier réacteur (19) pour amorcer la prise de volume dudit produit inorganique solide petit (3A) et intermédiaire (3B) dans le premier réacteur (19) et dans le second réacteur (20) afin d'obtenir un produit final inorganique solide précipité mouillé et gros (3C).
Le dispositif selon la présente invention possède au moins une conduite (52) d'aspiration du ciel gazeux de l'appareil (5) reliant l'appareil (5) audit appareil d'injection (30) d'un gaz (18) pour favoriser la récupération dudit produit inorganique solide petit (3A).
Le dispositif selon la présente invention comprend un second réacteur (20) comportant au moins un conduit de réaction (7A,7B,7C,7D) formant une pluralité de spires (4) de diamètre variable. De préférence le second réacteur spiralé (20) comprend des spires (4) possédant un rayon pouvant varier entre 0,2 m et 4,0 m, préférablement entre 0,4 m et 2,0 m, plus préférentiellement entre 0,5 m et 1,0 m.
De préférence le second réacteur spiralé (20) comprend au moins un conduit de réaction (7A,7B,7C,7D) possédant une section de passage comprise entre 20 $cm^2$ et 2000 $cm^2$, préférablement entre 80 $cm^2$ et 1300 $cm^2$, plus préférentiellement entre 180 $cm^2$ et 500 $cm^2$. De préférence le second réacteur (20) spiralé est de forme allongée définissant un axe longitudinal (10) sensiblement vertical (+/-10%).
De préférence le second réacteur spiralé (20) de cristallisation secondaire-décantation entoure le premier réacteur (19) de réaction-cristallisation primaire.
De préférence le second réacteur (20) de cristallisation secondaire-décantation est compris à l'intérieur du premier réacteur (19) de réaction-cristallisation primaire.
De préférence le premier réacteur (19) est de forme cylindrique, cylindro-conique tronqué, conique, conique tronqué, rectangulaire, carré ou de forme en spirale.
De préférence le produit final inorganique solide précipité mouillé et gros (3C) est récupéré par l'appareil de séparation de particules (5) après précipitation dans ledit second réacteur (20) de cristallisation-décantation et dans ledit premier réacteur (19), ledit dispositif comprenant:

- au moins un appareil d'amenée (15) du premier fluide (1) permettant d'injecter ledit premier fluide (1) par un conduit d'injection (15A) dans ledit premier réacteur (19),
- au moins un appareil d'amenée (16) du second fluide (2) permettant d'injecter ledit second fluide (2) par un conduit d'injection (16A) dans ledit premier réacteur (19),
- au moins un appareil (40B) pour ajuster le PH relié audit premier réacteur (19) par un conduit (41),
- au moins une vanne de connexion (51) reliant le premier réacteur (19) et le second réacteur (20), lesdites vannes (51) étant dispersées le long de la totalité de la hauteur dudit premier réacteur (19) et dudit second réacteur spiralé (20), la hauteur étant mesurée par rapport au second réacteur (20) de forme allongée définissant un axe longitudinal (10) sensiblement vertical (+/-10%),
- le produit inorganique solide petit (3A) et intermédiaire (3B) grossissant progressivement descendant par précipitation gravitationnelle dans ledit au moins un conduit (7A,7B,7C,7D) du second réacteur (20) dès que le poids dudit produit inorganique solide petit (3A) et intermédiaire (3B) permet de vaincre le flux montant du mélange du premier fluide (1) et du second fluide (2) et le produit inorganique solide petit (3A) et intermédiaire (3B) descendant est acheminé par gravité en glissant le long des parois dudit second réacteur (20) et par au moins un conduit de transfert (22) vers le fond du premier réacteur (19) afin d'aboutir à un produit final inorganique solide précipité mouillé et gros (3C) étant évacué vers l'appareil de séparation de particules et d'évacuation du reliquat secondaire (5),

- au moins un conduit (18A) d'injection de gaz (18) dans ledit premier réacteur (19).

Le dispositif selon la présente invention comprend un élément X choisi parmi Cd, Cr, Co, Cu, Eu, Ge, Fe, Pb, Mn, Ni, Pt, Sn, V, Zn, Ti, Si, Po, Hg, Yb, Sm, Md, No.

Le dispositif selon la présente invention comprend un élément $X^{2+}$ choisi parmi $Cd^{2+}$, $Cr^{2+}$, $Co^{2+}$, $Cu^{2+}$, $Eu^{2+}$, $Ge^{2+}$, $Fe^{2+}$, $Pb^{2+}$, $Mn^{2+}$, $Ni^{2+}$, $Pt^{2+}$, $Sn^{2+}$, $V^{2+}$, $Zn^{2+}$, $Ti^{2+}$, $Si^{2+}$, $Po^{2+}$, $Hg^{2+}$, $Yb^{2+}$, $Sm^{2+}$, $Md^{2+}$, $No^{2+}$.

Le dispositif selon la présente invention comprend un premier fluide (1) mélangé audit second fluide (2) dans la partie supérieure dudit premier réacteur (19) pour former un produit inorganique solide petit (3A) et intermédiaire (3B) grossissant progressivement, avant injection dudit produit inorganique solide petit (3A) et intermédiaire (3B) dans le second réacteur (20), où la vitesse ascensionnelle du premier fluide (1) mélangé audit second fluide (2) est comprise entre 0,01 m/s et 3 m/s.

Le dispositif selon la présente invention comprend au moins un conduit de réaction (7A,7B,7C,7D) spiralé du second réacteur (20) possédant un angle d'inclinaison (10A) des spires compris de préférence entre 10° et 70°, préférablement entre 20° et 60°, plus préférablement entre 48° et 55°, l'angle d'inclinaison (10A) étant défini par rapport à un axe horizontal (10B) sensiblement parallèle au sol (+/-10%).

Le dispositif selon la présente invention comprenant un second réacteur (20) constitué d'au moins un conduit de réaction (7A,7B,7C,7D) en forme de spirale dont le nombre de spire (4) est compris entre 1 et 20, préférablement entre 4 et 10, plus préférentiellement entre 4 et 6 par rapport à la hauteur du second réacteur (20) de forme allongée définissant un axe longitudinal (10) sensiblement vertical (+/-10%).

De préférence le poids d'un seul cristal du produit final inorganique solide précipité gros et sec (3D) est compris entre 0,001 g et 1,5 g, 0,005 g et 1,3 g, 0,006 g et 1,2 g, préférablement entre 0,01 g et 1,0 g, 0,01 g et 0,09 g, 0,01 g et 0,05 g, plus préférentiellement entre 0,1 g et 0,9 g, 0,3 g et 0,7 g, 0,4 g et 0,6 g.

De préférence ledit second réacteur spiralé (20) est de forme allongée définissant un axe longitudinal (10) sensiblement vertical (+/-10%).

De préférence la taille d'un cristal dudit produit final inorganique solide précipité gros et sec (3D) est comprise entre 1mm et 10mm, préférablement entre 2mm et 9mm, plus préférentiellement entre 3mm et 8mm, encore plus préférentiellement entre 4mm et 7mm, entre 5mm et 6mm.

La présente invention concerne un procédé de récupération d'un produit final inorganique solide précipité gros et sec (3D) constitué de phosphore, d'azote et d'un élément X choisi parmi les métaux alcalino-terreux Be,Mg,Ca,Sr,Ba,Ra, formé à partir d'un premier fluide (1) phosphoré et azoté mélangé à un second fluide (2) constitué d'au moins un cation divalent $X^{2+}$ choisi parmi $Be^{2+}$,$Mg^{2+}$,$Ca^{2+}$,$Sr^{2+}$,$Ba^{2+}$,$Ra^{2+}$,

ledit procédé opérant à une température comprise entre 20°C et 90°C,
et comportant les étapes suivantes:

- A) injection du premier fluide (1) par au-moins un point d'injection (9) relié à au moins un premier réacteur (19) de réaction-cristallisation primaire,
- B) injection d'un gaz (18) dans ledit premier réacteur (19) au niveau d'au-moins un point d'injection (50),
- C) ajustage du PH (40B) par injection d'une solution basique,
- D) injection du second fluide (2) par au-moins un point d'injection (8) relié audit premier réacteur (19) de réaction-cristallisation primaire,
- E) croissance des cristaux d'un produit inorganique solide petit (3A) et intermédiaire (3B) grossissant progressivement dans ledit premier réacteur (19),
- F) augmentation du temps de séjour des cristaux du produit inorganique solide petit (3A) et intermédiaire (3B) par transfert d'une partie du premier fluide (1), d'une partie du second fluide (2) mélangés à la solution basique et d'une partie des cristaux du produit inorganique solide petit (3A) et intermédiaire (3B) du premier réacteur (19) vers un second réacteur spiralé (20) de cristallisation secondaire-décantation,
- G) migration gravitationnelle des cristaux d'un produit final inorganique solide précipité mouillé et gros (3C) du second réacteur spiralé (20) vers le premier réacteur (19) par un conduit de transfert (22) reliant le second réacteur (20) au premier réacteur (19),
- H) séparation des cristaux d'un produit final inorganique solide précipité mouillé (3C) et du reliquat secondaire (6B) au niveau d'au moins un dispositif (5) de séparation des particules et d'évacuation du reliquat secondaire,
- I) séchage des cristaux du produit final inorganique solide précipité mouillé et gros (3C).

Le procédé selon la présente invention peut comprendre une étape additionnelle J) d'amorçage de la cristallisation par injection dans le premier réacteur (19) d'une fraction du produit inorganique solide petit (3A) et intermédiaire (3B) grâce à au moins un canal d'amorçage (17) reliant ledit appareil (5) de séparation de particules et d'évacuation du reliquat secondaire (6B) audit premier réacteur (19).

Le procédé selon la présente invention peut comprendre une étape additionnelle K) d'aspiration du ciel gazeux de l'appareil (5) dans laquelle au moins une conduite (52) d'aspiration du ciel gazeux de l'appareil (5) relie l'appareil (5) audit appareil d'injection (30) d'un gaz (18) pour favoriser la récupération dudit produit inorganique solide petit (3A).

De préférence, à l'étape D) le point d'injection (8) est situé à une hauteur supérieure à celle de la vanne (51) la plus élevée en hauteur (càd la vanne la plus proche des points d'injection (8) et (9)).

De préférence, le gaz (18) de l'étape B) est choisi parmi de l'air, du biogaz, du gaz pauvre en $CO_2$.

De préférence, le pH de l'étape C) atteint un PH compris entre 8 et 11, préférablement entre 9 et 10.

De préférence, ledit élément X est choisi parmi Cd, Cr, Co, Cu, Eu, Ge, Fe, Pb, Mn, Ni, Pt, Sn, V, Zn, Ti, Si, Po, Hg, Yb, Sm, Md, No.

De préférence, $X^{2+}$ est choisi parmi $Cd^{2+}$, $Cr^{2+}$, $Co^{2+}$, $Cu^{2+}$, $Eu^{2+}$, $Ge^{2+}$, $Fe^{2+}$, $Pb^{2+}$, $Mn^{2+}$, $Ni^{2+}$, $Pt^{2+}$, $Sn^{2+}$, $V^{2+}$, $Zn^{2+}$, $Ti^{2+}$, $Si^{2+}$, $Po^{2+}$, $Hg^{2+}$, $Yb^{2+}$, $Sm^{2+}$, $Md^{2+}$, $No^{2+}$.

La présente invention concerne un produit final inorganique solide précipité gros et sec (3D) susceptible d'être obtenu par le procédé de la présente invention. Dans la présente invention le produit final inorganique solide précipité gros et sec (3D) peut être utilisé comme engrais.

Les cristaux (3C) extraits peuvent être tamisés par un tamis dont la taille des mailles peut varier. Les cristaux du produit final mouillé (3C) seront ensuite séchés dans une cuve spécifique, par injection d'air chaud en provenance de l'unité de méthanisation. Les particules passantes peuvent être réintroduites en tête de décanteur, dans la cuve sommitale du réacteur (19) afin d'ensemencer la solution.

## Exemple d'applications

### Mise en œuvre simple :

Particulièrement adaptée dans le cadre d'une association avec une unité d'extraction d'eau depuis les digestats de digestion, le premier fluide (1) entrant n'est autre que la partie rétentat d'une filtration membranaire de type micro-ultra-ou nanofiltration. Préalablement à cette filtration le fluide est clarifié par un tamisage d'une maille de 50 à 1000 $\mu$m, idéalement 200 à 300 $\mu$m. En sortie du module objet de la présente invention, le fluide retourne dans le digesteur.

### Exemple de variante 1 :

Mise en œuvre en série : variante 1 :

Particulièrement adaptée dans le cadre d'une filtration par osmose inverse. La mise en place d'un module objet de la présente invention ou de plusieurs modules en série sur la boucle de recirculation d'une osmose inverse permet de diminuer la concentration en $NH_4^+$ du premier fluide (1) à filtrer. Ainsi, le $NH_4^+$ constituant une molécule difficile à retenir pour les OI BP-MP, la qualité du filtrat sera améliorée et le colmatage des membranes ainsi limité.

### Exemple de variante 2 :

### Travailler sur un fluide non clarifié ou davantage clarifié, engrais hybride organique minéral

La composition du MAP (Magnésium, Ammonium, Phosphate) peut être valorisée par l'ajout d'une part de matière organique, complétant l'action fertilisante du minéral extrait. Si le second fluide (2) entrant dans le dispositif objet de la présente invention est plus ou moins clarifié et ou issu d'un rétentat d'une filtration plus ou moins réductrice, la matière organique va alors former le noyau central des particules minérales qui s'agglomèreront autour dudit noyau. Le MAP extrait sera alors un engrais hybride organique/minéral.

### Résumé détaillé de l'invention:

Étape 1 :
Le premier fluide (1) phosphoré et azoté rejoint avec la canalisation (15A) le premier réacteur (19) via le point d'injection (9). Ce premier fluide est animé par une pompe hydraulique de transfert (15) ou par la pression intrinsèque liée au circuit fermé global.
Étape 2 :
Un second fluide (2) contenant un cation $X^{2+}$ est injecté dans le premier réacteur (19) via le point d'injection (8) à l'aide d'une pompe hydraulique de transfert ou de dosage (16).

Étape 3 :

Au même moment, lorsque le réacteur est rempli, un gaz (18) pauvre en $CO_2$, de l'air est injecté par la canalisation (18A) à l'aide d'un appareil (30).

Étape 4 :

Suite à ce stripping à l'air, un ajustement du pH est possible à l'aide de l'appareil (40B) qui injecte une solution basique (par exemple NaOH) via la conduite (41) permettant d'augmenter le pH.

Étape 5 :

Une fois les conditions de réaction réunies (pH et mélange optimal entre fluide 1 et fluide 2), la réaction chimique peut alors avoir lieu dans le réacteur (19), potentiellement accélérée à l'aide d'une méthode conventionnelle d'agitation.

Étape 6 :

Des cristaux du produit inorganique solide petit (3A) et intermédiaire (3B) grossissant progressivement tombent sous l'effet de la gravité au fond du réacteur (19) dans la partie tronconique.

Étape 7 :

Des cristaux de produits inorganiques solides petits (3A) et intermédiaires (3B) et gros mouillés (3C) sont libérés à intervalles réguliers par une ou plusieurs vannes (53) située au fond de la partie tronconique du premier réacteur (19) et sont dirigés vers un séparateur (5) comprenant un premier tamis (54) à grosses mailles dans sa partie supérieure et un second tamis (55) à petites mailles dans sa partie inférieure. Les particules les plus grossières (3C) traversant le premier tamis uniquement sont évacuées par le séparateur (5) via le conduit d'évacuation (70) et constituent le produit inorganique solide précipité gros sec (3D) après séchage. Les produits inorganiques solides petits (3A) et intermédiaires (3B) traversant le premier tamis et le second tamis sont réinjectées via la canalisation d'amorçage (17) dans la canalisation d'amenée du premier fluide (15A) afin d'ensemencer la solution de départ dans le premier réacteur (19). Le fluide traversant le séparateur (5) est exempt de particules et est appauvri en phosphore. Il constitue le reliquat secondaire (6B).

Étape 8 :

Le fluide restant dans le réacteur (19) est amené via l'une des vannes (51) séparatrices du premier réacteur (19) vers les conduits de réaction spiralés (7A,7B,7C,7D) du second réacteur (20). La réaction de précipitation peut alors continuer au fur et à mesure que le fluide se déplace dans les spires. Les produits inorganiques solides petits (3A) et intermédiaires (3B) qui continuent à grossir et à précipiter dans les spires (4), descendent sous l'action de la gravité dans la partie inférieure du réacteur (20) spiralé une fois qu'un produit inorganique solide gros mouillé (3C) est formé et rejoignent les particules stockées (3C) dans la partie tronconique du premier réacteur (19) via la canalisation (22).

Étape 9 :

Le reste du fluide contenu dans les spires et à présent appauvri en phosphore rejoint ascensionnellement le conduit d'évacuation (14) du reliquat principal (6C).

**Exemples comparatifs :**

| Nature de l'unité | Réacteur classique à colonnes | Réacteur de WO 2012/134255 | Réacteurs (19) et (20) selon la présente invention |
|---|---|---|---|
| **Dimensions de l'unité** | 8 mètres **de haut** x 3 mètres **de** diamètre, nécessite des locaux spéciaux et du génie civil | - | Réduite : Système transportable et "Plug & Play" Hauteur: 2 m à 3 m |
| **Capacité horaire** | minimum 80 $m^3$/h (500 kg/j) | - | modulable (à partir de 1 $m^3$/h) |
| **Méthode de séparation** | Décantation + Tamis vibrant ou centrifugation | - décanteur centrifuge - tambour rotatif - tamis | Décantation + Tamis vibrant |
| **Ensemencement** | Par fines particules de struvite ou grains de sable, silicate de calcium | Par grains de petite taille retournés au tambour rotatif | Par fines particules de struvite, silicate de calcium |

(suite)

| Nature de l'unité | Réacteur classique à colonnes | Réacteur de WO 2012/134255 | Réacteurs (19) et (20) selon la présente invention |
|---|---|---|---|
| Vitesse de décantation | selon la nature du substrat | - | 2 à 3 fois plus importante par rapport à un réacteur à colonne classique |
| Temps de séjour | 10 à 15 jours | 4 à 6 min dans le réacteur + temps dans tambour inconnu | 15 à 20 jours |
| Dimensions des cristaux | environ 1 mm | 1 mm à 1,5 mm | **1 mm à 10 mm** |
| Méthode de mélange | Ecoulement hydraulique vertical | Injection d'air | Ecoulement hydraulique par vortex + Air issu du tamisage |

Certaines caractéristiques de l'invention qui sont décrites sous forme de mode de réalisation séparés, peuvent aussi être fournies en combinaison dans un mode de réalisation unique. A l'opposé certaines caractéristiques de l'invention qui sont décrites sous forme de mode de réalisation en combinaison dans un mode de réalisation unique, peuvent aussi être fournies séparément sous forme de plusieurs modes de réalisation séparés.

Bien que l'invention ait été décrite en conjonction avec des modes de réalisation spécifiques de celui-ci, il est évident que plusieurs alternatives, modifications et variations peuvent être détectées par un homme du métier dans la portée des revendications ci-après.


## Revendications

1. **Dispositif** de récupération d'un produit inorganique solide précipité constitué de phosphore, d'azote et d'un élément X choisi parmi les métaux alcalino-terreux Be,Mg,Ca,Sr,Ba,Ra, formé à partir d'un premier fluide (1) phosphoré et azoté mélangé à un second fluide (2) constitué d'au moins un cation divalent $X^{2+}$ choisi parmi $Be^{2+}$, $Mg^{2+}$, $Ca^{2+}$, $Sr^{2+}$, $Ba^{2+}$, $Ra^{2+}$, ledit dispositif comprenant les moyens suivants:

   - au moins un premier réacteur (19) de réaction-cristallisation primaire,
   - au moins un appareil d'ajustage du pH (40B),
   - au moins un appareil d'injection (30) d'un gaz (18) dans le premier réacteur (19),
   - au moins un appareil d'amenée (15) du premier fluide (1) dans le premier réacteur (19),
   - au moins un appareil d'amenée (16) du second fluide (2) dans le premier réacteur (19), et
   - au moins un appareil (5) de séparation de particules et d'évacuation d'un reliquat secondaire (6B), ledit appareil de séparation comprenant un premier tamis (54) à grosses mailles dans sa partie supérieure et un second tamis (55) à petites mailles dans sa partie inférieure afin de séparer un solide précipité mouillé et gros (3C) d'un produit inorganique solide petit (3A) et intermédiaire (3B),

   **caractérisé en ce que** ledit dispositif comprend au moins un second réacteur (20) de cristallisation secondaire-décantation ayant une forme géométrique spiralée, ledit second réacteur (20) étant relié directement audit premier réacteur (19) par au moins une vanne (51) permettant au lit réactionnel du premier réacteur (19), contenant le produit inorganique solide petit (3A) et intermédiaire (3B) grossissant progressivement, d'être transféré dans le second réacteur (20) pour y effectuer une cristallisation secondaire avant de précipiter pour obtenir le produit final inorganique solide précipité mouillé et gros (3C) et par un conduit de transfert (22) reliant le second réacteur (20) au fond du premier réacteur (19).

2. Dispositif selon la revendication 1, dans lequel au moins un canal d'amorçage (17), contenant ledit produit inorganique solide petit (3A) et intermédiaire (3B), relie ledit appareil (5) de séparation de particules et d'évacuation du reliquat secondaire (6B) à au moins un conduit d'injection (15A) du premier fluide (1) dans le premier réacteur (19) pour amorcer le grossissement dudit produit inorganique solide petit (3A) et intermédiaire (3B) dans le premier réacteur (19) et dans le second réacteur (20) afin d'obtenir un produit final inorganique solide précipité mouillé et gros (3C).

**3.** Dispositif selon la revendication 1, dans lequel au moins une conduite (52) d'aspiration du ciel gazeux de l'appareil (5) relie l'appareil (5) audit appareil d'injection (30) d'un gaz (18) pour favoriser la récupération dudit produit inorganique solide petit (3A).

**4.** Dispositif selon la revendication 1, dans lequel ledit second réacteur (20) comporte au moins un conduit de réaction (7A,7B,7C,7D) formant une pluralité de spires (4) de diamètre variable.

**5.** Dispositif selon la revendication 4, dans lequel les spires (4) possèdent un rayon pouvant varier entre 0,2 m et 4,0 m, préférablement entre 0,4 m et 2,0 m, plus préférentiellement entre 0,5 m et 1,0 m.

**6.** Dispositif selon la revendication 4, dans lequel ledit au moins un conduit de réaction (7A,7B,7C,7D) du second réacteur (20) possède une section de passage comprise entre 20 cm$^2$ et 2000 cm$^2$, préférablement entre 80 cm$^2$ et 1300 cm$^2$, plus préférentiellement entre 180 cm$^2$ et 500 cm$^2$.

**7.** Dispositif selon la revendication 1, dans lequel ledit second réacteur (20) est de forme allongée définissant un axe longitudinal (10) sensiblement vertical.

**8.** Dispositif selon la revendication 1, dans lequel le second réacteur spiralé (20) de cristallisation secondaire-décantation entoure le premier réacteur (19) de réaction-cristallisation primaire.

**9.** Dispositif selon la revendication 1, dans lequel le second réacteur (20) de cristallisation secondaire-décantation est intégré à l'intérieur du premier réacteur (19) de réaction-cristallisation primaire.

**10.** Dispositif selon la revendication 1, dans lequel le premier réacteur (19) est de forme cylindrique, cylindro-conique tronqué, conique, conique tronqué, rectangulaire, carré, en spirale.

**11.** Dispositif selon la revendication 1, dans lequel ledit produit final inorganique solide précipité mouillé et gros (3C) est récupéré par l'appareil de séparation de particules (5) après précipitation dans ledit second réacteur (20) de cristallisation-décantation et dans ledit premier réacteur (19), ledit dispositif comprenant:

- au moins un appareil d'amenée (15) du premier fluide (1) permettant d'injecter ledit premier fluide (1) par un conduit d'injection (15A) dans ledit premier réacteur (19),
- au moins un appareil d'amenée (16) du second fluide (2) permettant d'injecter ledit second fluide (2) par un conduit d'injection (16A) dans ledit premier réacteur (19),
- au moins un appareil (40B) pour ajuster le pH relié audit premier réacteur (19) par un conduit (41),
- au moins une vanne de connexion (51) reliant le premier réacteur (19) et le second réacteur (20), lesdites vannes (51) étant dispersées le long de la totalité de la hauteur dudit premier réacteur (19) et dudit second réacteur (20), la hauteur étant mesurée par rapport au second réacteur (20) de forme allongée définissant un axe longitudinal (10) sensiblement vertical,
- le produit inorganique solide petit (3A) et intermédiaire (3B) grossissant progressivement descendant par précipitation gravitationnelle dans ledit au moins un conduit (7A,7B,7C,7D) du second réacteur (20) dès que le poids dudit produit inorganique solide petit (3A) et intermédiaire (3B) permet de vaincre le flux montant du mélange du premier fluide (1) et du second fluide (2) et le produit inorganique solide petit (3A) et intermédiaire (3B) descendant est acheminé par gravité en glissant le long des parois dudit second réacteur (20) et par au moins un conduit de transfert (22) vers le fond du premier réacteur (19) afin d'aboutir à un produit final inorganique solide précipité mouillé et gros (3C) étant évacué vers l'appareil de séparation de particules et d'évacuation du reliquat secondaire (5),
- au moins un conduit (18A) d'injection de gaz (18) dans ledit premier réacteur (19).

**12.** Dispositif selon la revendication 1, dans lequel ledit élément X est choisi parmi Cd, Cr, Co, Cu, Eu, Ge, Fe, Pb, Mn, Ni, Pt, Sn, V, Zn, Ti, Si, Po, Hg, Yb, Sm, Md, No.

**13.** Dispositif selon la revendication 1, dans lequel X$^{2+}$ est choisi parmi Cd$^{2+}$, Cr$^{2+}$, Co$^{2+}$, Cu$^{2+}$, Eu$^{2+}$, Ge$^{2+}$, Fe$^{2+}$, Pb$^{2+}$, Mn$^{2+}$, Ni$^{2+}$, Pt$^{2+}$, Sn$^{2+}$, V$^{2+}$, Zn$^{2+}$, Ti$^{2+}$, Si$^{2+}$, Po$^{2+}$, Hg$^{2+}$, Yb$^{2+}$, Sm$^{2+}$, Md$^{2+}$, No$^{2+}$.

**14.** Dispositif selon la revendication 1, dans lequel ledit premier fluide (1) est mélangé audit second fluide (2) dans la partie supérieure dudit premier réacteur (19) pour former un produit inorganique solide petit (3A) et intermédiaire (3B) grossissant progressivement, avant injection dudit produit inorganique solide petit (3A) et intermédiaire (3B) dans le second réacteur (20), où la vitesse ascensionnelle du premier fluide (1) mélangé audit second fluide (2) est comprise entre 0,01 m/s et 3 m/s.

15. Dispositif selon la revendication 1, dans lequel ledit au moins un conduit de réaction (7A,7B,7C,7D) spiralé du second réacteur (20) possède un angle d'inclinaison (10A) des spires compris de préférence entre 10° et 70°, préférablement entre 20° et 60°, plus préférablement entre 48° et 55°, l'angle d'inclinaison (10A) étant défini par rapport à un axe horizontal (10B) sensiblement parallèle au sol.

16. Dispositif selon la revendication 1, dans lequel le second réacteur (20) est constitué d'au moins un conduit de réaction (7A,7B,7C,7D) en forme de spirale dont le nombre de spire (4) est compris entre 1 et 20, préférablement entre 4 et 10, plus préférentiellement entre 4 et 6 par rapport à la hauteur du second réacteur (20) de forme allongée définissant un axe longitudinal (10) sensiblement vertical.

17. Dispositif selon la revendication 1, dans lequel le poids d'un cristal du produit final inorganique solide précipité gros et sec (3D) est compris entre 0,001 g et 1,5 g, préférablement entre 0,01 g et 1,0 g, plus préférentiellement entre 0,1 g et 0,9 g.

18. Dispositif selon la revendication 1, dans lequel la taille d'un cristal dudit produit final inorganique solide précipité gros et sec (3D) est comprise entre 1mm et 10mm.

19. **Procédé** de récupération d'un produit inorganique solide précipité constitué de phosphore, d'azote et d'un élément X choisi parmi les métaux alcalino-terreux Be,Mg,Ca,Sr,Ba,Ra, formé à partir d'un premier fluide (1) phosphoré et azoté mélangé à un second fluide (2) constitué d'au moins un cation divalent $X^{2+}$ choisi parmi $Be^{2+},Mg^{2+},Ca^{2+},Sr^{2+},Ba^{2+},Ra^{2+}$,
ledit procédé opérant à une température comprise entre 20°C et 90°C,
et comportant les étapes suivantes:

- A) injection du premier fluide (1) par au-moins un point d'injection (9) relié à au moins un premier réacteur (19) de réaction-cristallisation primaire,
- B) injection d'un gaz (18) dans ledit premier réacteur (19) au niveau d'au-moins un point d'injection (50),
- C) ajustage du pH (40B) par injection d'une solution basique,
- D) injection du second fluide (2) par au-moins un point d'injection (8) relié audit premier réacteur (19) de réaction-cristallisation primaire,
- E) croissance des cristaux d'un produit inorganique solide petit (3A) et intermédiaire (3B) grossissant progressivement dans ledit premier réacteur (19),
- F) augmentation du temps de séjour des cristaux du produit inorganique solide petit (3A) et intermédiaire (3B) par transfert d'une partie du premier fluide (1), d'une partie du second fluide (2) mélangés à la solution basique et d'une partie des cristaux du produit inorganique solide petit (3A) et intermédiaire (3B) du premier réacteur (19) vers un second réacteur spiralé (20) de cristallisation secondaire-décantation,
- G) migration gravitationnelle des cristaux d'un produit final inorganique solide précipité mouillé et gros (3C) du second réacteur spiralé (20) vers le premier réacteur (19) par un conduit de transfert (22) reliant le second réacteur (20) au premier réacteur (19),
- H) séparation des cristaux d'un produit final inorganique solide précipité mouillé (3C) et du reliquat secondaire (6B) au niveau d'au moins un dispositif (5) de séparation des particules et d'évacuation du reliquat secondaire, ledit dispositif (5) comprenant un premier tamis (54) à grosses mailles dans sa partie supérieure et un second tamis (55) à petites mailles dans sa partie inférieure afin de séparer le solide précipité mouillé et gros (3C) du produit inorganique solide petit (3A) et intermédiaire (3B),
- I) séchage des cristaux du produit final inorganique solide précipité mouillé et gros (3C).

20. Procédé selon la revendication 19, comprenant une étape additionnelle J) d'amorçage de la cristallisation par injection dans le premier réacteur (19) d'une fraction du produit inorganique solide petit (3A) et intermédiaire (3B) grâce à au moins un canal d'amorçage (17) reliant ledit appareil (5) de séparation de particules et d'évacuation du reliquat secondaire (6B) audit premier réacteur (19).

21. Procédé selon la revendication 19, comprenant une étape additionnelle K) d'aspiration du ciel gazeux de l'appareil (5) dans laquelle au moins une conduite (52) d'aspiration du ciel gazeux de l'appareil (5) relie l'appareil (5) audit appareil d'injection (30) d'un gaz (18) pour favoriser la récupération dudit produit inorganique solide petit (3A).

**22.** Procédé selon la revendication 19, dans lequel à l'étape D) le point d'injection (8) est situé à une hauteur supérieure à celle d'une vanne (51) la plus élevée en hauteur.

**23.** Procédé selon la revendication 19, dans lequel le gaz (18) de l'étape B) est choisi parmi de l'air, du biogaz, du gaz pauvre en $CO_2$.

**24.** Procédé selon la revendication 19, dans lequel le pH de l'étape C) atteint un pH compris entre 8 et 11, préférablement entre 9 et 10.

**25.** Procédé selon la revendication 19, dans lequel ledit élément X est choisi parmi Cd, Cr, Co, Cu, Eu, Ge, Fe, Pb, Mn, Ni, Pt, Sn, V, Zn, Ti, Si, Po, Hg, Yb, Sm, Md, No.

**26.** Procédé selon la revendication 19, dans lequel $X^{2+}$ est choisi parmi $Cd^{2+}$, $Cr^{2+}$, $Co^{2+}$, $Cu^{2+}$, $Eu^{2+}$, $Ge^{2+}$, $Fe^{2+}$, $Pb^{2+}$, $Mn^{2+}$, $Ni^{2+}$, $Pt^{2+}$, $Sn^{2+}$, $V^{2+}$, $Zn^{2+}$, $Ti^{2+}$, $Si^{2+}$, $Po^{2+}$, $Hg^{2+}$, $Yb^{2+}$, $Sm^{2+}$, $Md^{2+}$, $No^{2+}$.

**Patentansprüche**

**1. Vorrichtung** zur Rückgewinnung eines festen, gefällten anorganischen Produkts, bestehend aus Phosphor, Stickstoff und einem Element X, ausgewählt aus den Erdalkalimetallen Be, Mg, Ca, Sr, Ba, Ra, gebildet aus einem ersten Phosphor- und Stickstoff-Fluid (1), gemischt mit einem zweiten Fluid (2), das aus mindestens einem zweiwertigen Kation $X^{2+}$ besteht, ausgewählt aus $Be^{2+}$, $Mg^{2+}$, $Ca^{2+}$, $Sr^{2+}$, $Ba^{2+}$, $Ra^{2+}$, wobei die genannte Vorrichtung die folgenden Mittel umfasst:

- mindestens einen ersten Reaktions-Primärkristallisations-Reaktor (19),
- mindestens eine pH-Wert-Einstelleinrichtung (40B),
- mindestens eine Einrichtung (30) zum Einspritzen eines Gases (18) in den ersten Reaktor (19),
- mindestens eine Einrichtung zum Zuführen (15) des ersten Fluids (1) in den ersten Reaktor (19),
- mindestens eine Einrichtung (16) zum Zuführen des zweiten Fluids (2) in den ersten Reaktor (19), und
- mindestens eine Einrichtung (5) zum Trennen von Partikeln und zum Ableiten eines sekundären Rückstands (6B), umfassend ein erstes Sieb (54) mit großen Maschen in ihrem oberen Teil und ein zweites Sieb (55) mit kleinen Maschen in ihrem unteren Teil, um einen gefällten, feuchten und großen Feststoff (3C) von einem festen, kleinen (3A) und mittleren (3B) anorganischen Produkt zu trennen,

**dadurch gekennzeichnet, dass** die genannte Vorrichtung mindestens einen zweiten Sekundärkristallisations-Dekantierungs-Reaktor (20) mit einer spiralförmigen geometrischen Form aufweist, wobei der genannte zweite Reaktor (20) durch mindestens ein Ventil (51), wodurch das Reaktionsbett des ersten Reaktors (19), der das sich zunehmend vergrößernde, feste, kleine (3A) und mittlere (3B) anorganische Produkt enthält, in den zweiten Reaktor (20) überführt werden kann, um darin eine sekundäre Kristallisation vor der Fällung durchzuführen, um das gefällte, feste, feuchte und große anorganische Endprodukt (3C) zu erhalten, und durch eine Überführungsrohrleitung (22), die den zweiten Reaktor (20) mit dem Boden des ersten Reaktors (19) verbindet, direkt mit dem genannten ersten Reaktor (19) verbunden ist.

**2.** Vorrichtung nach Anspruch 1, wobei mindestens ein Initiierungskanal (17), der das genannte feste, kleine (3A) und mittlere (3B) anorganische Produkt enthält, die genannte Einrichtung (5) zum Trennen von Partikeln und zum Ableiten des sekundären Rückstands (6B) mit mindestens einer Einspritzrohrleitung (15A) des ersten Fluids (1) im ersten Reaktor (19) verbindet, um die Vergrößerung des genannten festen, kleinen (3A) und mittleren (3B) anorganischen Produkts im ersten Reaktor (19) und im zweiten Reaktor (20) zu initiieren, um ein gefälltes, festes, feuchtes und großes anorganisches Endprodukt (3C) zu erhalten.

**3.** Vorrichtung nach Anspruch 1, wobei mindestens eine Leitung (52) zum Ansaugen des Gasraums der Einrichtung (5) die Einrichtung (5) mit der genannten Einspritzvorrichtung (30) für ein Gas (18) verbindet, um die Rückgewinnung des genannten festen, kleinen anorganischen Produkts (3A) zu fördern.

**4.** Vorrichtung nach Anspruch 1, wobei der genannte zweite Reaktor (20) mindestens eine Reaktionsrohrleitung (7A, 7B, 7C, 7D) umfasst, die eine Vielzahl von Windungen (4) mit variablem Durchmesser bildet.

**5.** Vorrichtung nach Anspruch 4, wobei die Windungen (4) einen Radius aufweisen, der zwischen 0,2 m und 4,0 m, vorzugsweise zwischen 0,4 m und 2,0 m, bevorzugter zwischen 0,5 m und 1,0 m variieren kann.

6. Vorrichtung nach Anspruch 4, wobei die genannte mindestens eine Reaktionsleitung (7A, 7B, 7C, 7D) des zweiten Reaktors (20) einen Durchgangsquerschnitt zwischen 20 $cm^2$ und 2000 $cm^2$, vorzugsweise zwischen 80 $cm^2$ und 1300 $cm^2$, bevorzugter zwischen 180 $cm^2$ und 500 $cm^2$ aufweist.

7. Vorrichtung nach Anspruch 1, wobei der genannte zweite Reaktor (20) eine längliche Form aufweist, die eine im Wesentlichen vertikale Längsachse (10) definiert.

8. Vorrichtung nach Anspruch 1, wobei der zweite spiralförmige Sekundärkristallisations-Dekantierungs-Reaktor (20) den ersten Reaktions-Primärkristallisations-Reaktor (19) umgibt.

9. Vorrichtung nach Anspruch 1, wobei der zweite Sekundärkristallisations-Dekantierungs-Reaktor (20) in den ersten Reaktions-Primärkristallisations-Reaktor (19) integriert ist.

10. Vorrichtung nach Anspruch 1, wobei der erste Reaktor (19) eine zylindrische, abgeschnittene zylindrisch-konische, konische, abgeschnittene konische, rechteckige, quadratische, spiralförmige Form aufweist.

11. Vorrichtung nach Anspruch 1, wobei das genannte feste, feuchte und große anorganische Endprodukt (3C) durch die Einrichtung (5) zum Trennen von Partikeln nach der Fällung in dem genannten zweiten Sekundärkristallisations-Dekantierungs-Reaktor (20) und in dem genannten ersten Reaktor (19) rückgewonnen wird, wobei die genannte Vorrichtung umfasst:

   - mindestens eine Einrichtung (15) zum Zuführen des ersten Fluids (1), wodurch das genannte erste Fluid (1) durch eine Einspritzrohrleitung (15A) in den genannten ersten Reaktor (19) eingespritzt werden kann,
   - mindestens eine Einrichtung (16) zum Zuführen des zweiten Fluids (2), wodurch das genannte zweite Fluid (2) durch eine Einspritzrohrleitung (16A) in den genannten ersten Reaktor (19) eingespritzt werden kann,
   - mindestens eine Einrichtung (40B) zum Einstellen des pH-Werts, die mit dem genannten ersten Reaktor (19) durch eine Rohrleitung (41) verbunden ist,
   - mindestens ein Verbindungsventil (51), das den ersten Reaktor (19) und den zweiten Reaktor (20) verbindet, wobei die genannten Ventile (51) über die gesamte Höhe des genannten ersten Reaktors (19) und des genannten zweiten Reaktors (20) verteilt sind, wobei die Höhe in Bezug auf den zweiten länglichen Reaktor (20) gemessen wird, der eine im Wesentlichen vertikale Längsachse (10) definiert,
   - das sich zunehmend vergrößernde feste, kleine (3A) und mittlere (3B) anorganische Produkt, das durch Schwerkraftfällung in der genannten mindestens einen Rohrleitung (7A, 7B, 7C, 7D) des zweiten Reaktors (20) absteigt, sobald das Gewicht des genannten festen, kleinen (3A) und mittleren (3B) anorganischen Produkts den Aufwärtsstrom der Mischung aus dem ersten Fluid (1) und dem zweiten Fluid (2) überwinden kann, und das feste, kleine (3A) und mittlere (3B) anorganische Produkt wird durch Schwerkraft durch Gleiten entlang der Wände des genannten zweiten Reaktors (20) und durch mindestens eine Überführungsrohrleitung (22) zum Boden des ersten Reaktors (19) befördert, um ein gefälltes, festes, feuchtes und großes anorganisches Endprodukt (3C) zu ergeben, das zu der Einrichtung zum Trennen von Partikeln und zum Ableiten des sekundären Rückstands (5) geleitet wird,
   - mindestens eine Rohrleitung (18A) zum Einspritzen von Gas (18) in den genannten ersten Reaktor (19).

12. Vorrichtung nach Anspruch 1, wobei das genannte Element X ausgewählt ist aus Cd, Cr, Co, Cu, Eu, Ge, Fe, Pb, Mn, Ni, Pt, Sn, V, Zn, Ti, Si, Po, Hg, Yb, Sm, Md, No.

13. Vorrichtung nach Anspruch 1, wobei $X^{2+}$ ausgewählt ist aus $Cd^{2+}$, $Cr^{2+}$, $Co^{2+}$, $Cu^{2+}$, $Eu^{2+}$, $Ge^{2+}$, $Fe^{2+}$, $Pb^{2+}$, $Mn^{2+}$, $Ni^{2+}$, $Pt^{2+}$, $Sn^{2+}$, $V^{2+}$, $Zn^{2+}$, $Ti^{2+}$, $Si^{2+}$, $Po^{2+}$, $Hg^{2+}$, $Yb^{2+}$, $Sm^{2+}$, $Md^{2+}$, $No^{2+}$.

14. Vorrichtung nach Anspruch 1, wobei das genannte erste Fluid (1) vor dem Einspritzen des genannten festen, kleinen (3A) und mittleren (3B) anorganischen Produkts in den zweiten Reaktor (20) mit dem genannten zweiten Fluid (2) im oberen Teil des genannten ersten Reaktors (19) gemischt wird, um ein sich zunehmend vergrößerndes festes, kleines (3A) und mittleres (3B) anorganisches Produkt zu bilden, wobei die Aufstiegsgeschwindigkeit des ersten Fluids (1), das mit dem genannten zweiten Fluid (2) gemischt ist, zwischen 0,01 m/s und 3 m/s liegt.

15. Vorrichtung nach Anspruch 1, wobei die genannte mindestens eine spiralförmige Reaktionsrohrleitung (7A, 7B, 7C, 7D) des zweiten Reaktors (20) einen Neigungswinkel (10A) der Windungen vorzugsweise zwischen 10° und 70°, vorzugsweise zwischen 20° und 60°, bevorzugter zwischen 48° und 55° aufweist, wobei der Neigungswinkel (10A) in Bezug auf eine horizontale Achse (10B) im Wesentlichen parallel zum Boden definiert ist.

16. Vorrichtung nach Anspruch 1, wobei der zweite Reaktor (20) aus mindestens einer Reaktionsrohrleitung (7A, 7B, 7C, 7D) in Form einer Spirale besteht, deren Anzahl der Windungen (4) zwischen 1 und 20, vorzugsweise zwischen 4 und 10, bevorzugter zwischen 4 und 6 in Bezug auf die Höhe des zweiten Reaktors (20) mit länglicher Form liegt, der eine im Wesentlichen vertikale Längsachse (10) definiert.

17. Vorrichtung nach Anspruch 1, wobei das Gewicht eines Kristalls des gefällten, festen, großen und trockenen anorganischen Endprodukts (3D) zwischen 0,001 g und 1,5 g, vorzugsweise zwischen 0,01 g und 1,0 g, noch bevorzugter zwischen 0,1 g und 0,9 g liegt.

18. Vorrichtung nach Anspruch 1, wobei die Größe eines Kristalls des genannten festen, gefällten großen und trockenen anorganischen Endprodukts (3D) zwischen 1 mm und 10 mm liegt.

19. **Verfahren** zur Rückgewinnung eines gefällten, festen anorganischen Produkts, bestehend aus Phosphor, Stickstoff und einem Element X, ausgewählt aus den Erdalkalimetallen Be, Mg, Ca, Sr, Ba, Ra, gebildet aus einem ersten Phosphor- und Stickstoff-Fluid (1), gemischt mit einem zweiten Fluid (2), das aus mindestens einem zweiwertigen Kation $X^{2+}$ besteht, ausgewählt aus $Be^{2+}$, $Mg^{2+}$, $Ca^{2+}$, $Sr^{2+}$, $Ba^{2+}$, $Ra^{2+}$, wobei das genannte Verfahren bei einer Temperatur zwischen 20 °C und 90 °C arbeitet, und die folgenden Schritte umfasst:

- A) Einspritzen des ersten Fluids (1) durch mindestens einen Einspritzpunkt (9), der mit mindestens einem ersten Reaktions-Primärkristallisations-Reaktor (19) verbunden ist,
- B) Einspritzen eines Gases (18) in den genannten ersten Reaktor (19) an mindestens einem Einspritzpunkt (50),
- C) Einstellen des pH-Werts (40B) durch Einspritzen einer basischen Lösung,
- D) Einspritzen des zweiten Fluids (2) durch mindestens einen Einspritzpunkt (8), der mit dem genannten ersten Reaktions-Primärkristallisations-Reaktor (19) verbunden ist,
- E) Wachstum der Kristalle eines sich zunehmend vergrößernden festen, kleinen (3A) und mittleren (3B) anorganischen Produkts in dem genannten ersten Reaktor (19),
- F) Erhöhen der Verweilzeit der Kristalle des festen, kleinen (3A) und mittleren (3B) anorganischen Produkts durch Überführen eines Teils des ersten Fluids (1), eines Teils des zweiten Fluids (2), gemischt mit der basischen Lösung, und von einem Teil der Kristalle des festen, kleinen (3A) und mittleren (3B) anorganischen Produkts vom ersten Reaktor (19) zu einem zweiten Sekundärkristallisations-Dekantierungs-Spiralreaktor (20),
- G) Schwerkraftmigration der Kristalle eines gefällten, festen, feuchten und großen anorganische Endprodukts (3C) vom zweiten Spiralreaktor (20) zum ersten Reaktor (19) durch eine Überführungsrohrleitung (22), die den zweiten Reaktor (20) mit dem ersten Reaktor (19) verbindet,
- H) Abtrennen der Kristalle eines gefällten, festen, feuchten und großen anorganischen Endprodukts (3C) und des sekundären Rückstands (6B) auf der Ebene mindestens einer Einrichtung (5) zum Trennen von Partikeln und Ableiten des sekundären Rückstands, wobei die genannte Einrichtung (5) ein erstes Sieb (54) mit großen Maschen in ihrem oberen Teil und ein zweites Sieb (55) mit kleinen Maschen in ihrem unteren Teil umfasst, um den gefällten, festen, feuchten und großen Feststoff (3C) von dem festen, kleinen (3A) und mittleren (3B) anorganischen Produkt zu trennen,
- I) Trocknen der Kristalle des gefällten, festen, feuchten und großen anorganischen Endprodukts (3C).

20. Verfahren nach Anspruch 19, umfassend einen zusätzlichen Schritt J) zum Initiieren der Kristallisation durch Einspritzen einer Fraktion des festen, kleinen (3A) und mittleren (3B) anorganischen Produkts mittels mindestens eines Initiierungskanals (17), der die genannte Einrichtung (5) zum Trennen von Partikeln und zum Ableiten des sekundären Rückstands (6B) mit dem genannten ersten Reaktor (19) verbindet, in den ersten Reaktor (19).

21. Verfahren nach Anspruch 19, umfassend einen zusätzlichen Schritt K) des Ansaugens des Gasraums der Einrichtung (5), wobei mindestens eine Leitung (52) zum Ansaugen des Gasraums der Einrichtung (5) die Einrichtung (5) mit der genannten Einspritzvorrichtung (30) eines Gases (18) verbindet, um die Rückgewinnung des genannten festen, kleinen anorganischen Produkts (3A) zu fördern.

22. Verfahren nach Anspruch 19, wobei in Schritt D) der Einspritzpunkt (8) auf einer Höhe liegt, die größer als die eines Ventils (51) mit der höchsten Höhe ist.

23. Verfahren nach Anspruch 19, wobei das Gas (18) von Schritt B) ausgewählt ist aus Luft, Biogas, Co2-armem Gas.

**24.** Verfahren nach Anspruch 19, wobei der pH-Wert von Schritt C) einen pH-Wert zwischen 8 und 11, vorzugsweise zwischen 9 und 10 erreicht.

**25.** Verfahren nach Anspruch 19, wobei das genannte Element X ausgewählt ist aus Cd, Cr, Co, Cu, Eu, Ge, Fe, Pb, Mn, Ni, Pt, Sn, V, Zn, Ti, Si, Po, Hg, Yb, Sm, Md, No.

**26.** Verfahren nach Anspruch 19, wobei $X^{2+}$ ausgewählt ist aus $Cd^{2+}$, $Cr^{2+}$, $Co^{2+}$, $Cu^{2+}$, $Eu^{2+}$, $Ge^{2+}$, $Fe^{2+}$, $Pb^{2+}$, $Mn^{2+}$, $Ni^{2+}$, $Pt^{2+}$, $Sn^{2+}$, $V^{2+}$, $Zn^{2+}$, $Ti^{2+}$, $Si^{2+}$, $Po^{2+}$, $Hg^{2+}$, $Yb^{2+}$, $Sm^{2+}$, $Md^{2+}$, $No^{2+}$.

**Claims**

**1.** **A device** for recovering a precipitated solid inorganic product consisting of phosphorus, nitrogen and an element X selected from the alkaline earth metals Be, Mg, Ca, Sr, Ba, Ra, formed from a first phosphorus- and nitrogen-containing fluid (1) mixed with a second fluid (2) consisting of at least one divalent cation $X^{2+}$ selected from $Be^{2+}$, $Mg^{2+}$, $Ca^{2+}$, $Sr^{2+}$, $Ba^{2+}$, $Ra^{2+}$,
said device comprising the following means:

- at least one first reactor (19) for primary reaction-crystallisation,
- at least one apparatus for adjusting the pH (40B),
- at least one apparatus (30) for injecting a gas (18) into the first reactor (19),
- at least one apparatus (15) for introducing the first fluid (1) into the first reactor (19).
- at least one apparatus (16) for introducing the second fluid (2) into the first reactor (19), and
- at least one apparatus (5) for separating particles and discharging a secondary remnant (6B), comprising a first sieve (54) with large meshes in its upper part and a second sieve (55) with small meshes in its lower part in order to separate a wet and large precipitated solid (3C) from a small (3A) and intermediate (3B) solid inorganic product,

**characterised in that** said device comprises at least one second reactor (20) for secondary crystallisation-decantation having a spiral geometric shape, said second reactor (20) being connected directly to said first reactor (19) by at least one valve (51) allowing the reaction bed of the first reactor (19), containing the small (3A) and intermediate (3B) solid inorganic product becoming gradually bigger, to be transferred into the second reactor (20) for performing therein a secondary crystallisation before precipitating in order to obtain the wet and large precipitated solid inorganic final product (3C), and by a transfer duct (22) connecting the second reactor (20) to the bottom of the first reactor (19).

**2.** The device according to claim 1, wherein at least one initiation channel (17), containing said small (3A) and intermediate (3B) solid inorganic product, connects said apparatus (5) for separating particles and discharging the secondary remnant (6B) to at least one injection conduit (15A) of the first fluid (1) in the first reactor (19) for initiating the growth of said small (3A) and intermediate (3B) solid inorganic product in the first reactor (19) and in the second reactor (20) in order to obtain a wet and large precipitated solid inorganic final product (3C).

**3.** The device according to claim 1, wherein at least one conduit (52) for suctioning the gas upper volume of the apparatus (5) connects the apparatus (5) to said apparatus (30) for injecting a gas (18) for promoting the recovery of said small solid inorganic product (3A).

**4.** The device according to claim 1, wherein said second reactor (20) comprises at least one reaction conduit (7A, 7B, 7C, 7D) forming a plurality of turns (4) of variable diameter.

**5.** The device according to claim 4, wherein the turns (4) have a radius which can vary between 0.2 m and 4.0 m, preferably between 0.4 m and 2.0 m, more preferably between 0.5 m and 1.0 m.

**6.** The device according to claim 4, wherein said at least one reaction conduit (7A, 7B, 7C, 7D) of the second reactor (20) has a passage section between 20 $cm^2$ and 2000 $cm^2$, preferably between 80 $cm^2$ and 1300 $cm^2$, more preferably between 180 $cm^2$ and 500 $cm^2$.

**7.** The device according to claim 1, wherein said second reactor (20) is of an elongate shape defining a substantially vertical longitudinal axis (10).

8. The device according to claim 1, wherein the second spiral reactor (20) for secondary crystallisation-decantation surrounds the first reactor (19) for primary reaction-crystallisation.

9. The device according to claim 1, wherein the second reactor (20) for secondary crystallisation-decantation is integrated into the inside of the first reactor (19) for primary reaction-crystallisation.

10. The device according to claim 1, wherein the first reactor (19) is of a cylindrical, cylindrofrustoconical, conical, frustoconical, rectangular, square, or spiral shape.

11. The device according to claim 1, wherein said wet and large precipitated solid inorganic final product (3C) is recovered by the apparatus (5) for separating particles after precipitation in said second crystallisation-decantation reactor (20) and in said first reactor (19), said device comprising:

   - at least one apparatus (15) for introducing the first fluid (1), making it possible to inject said first fluid (1) through an injection conduit (15A) into said first reactor (19),
   - at least one apparatus (16) for introducing the second fluid (2), making it possible to inject said second fluid (2) through an injection conduit (16A) into said first reactor (19),
   - at least one apparatus (40B) for adjusting the pH connected to said first reactor (19) through a conduit (41),
   - at least one connection valve (51) connecting the first reactor (19) and the second reactor (20), said valves (51) being distributed along the entire height of said first reactor (19) and said second reactor (20), the height being measured relative to the second reactor (20) of elongate shape defining a substantially vertical longitudinal axis (10),
   - the small (3A) and intermediate (3B) solid inorganic product becoming gradually bigger, falling by gravity precipitation in said at least one conduit (7A, 7B, 7C, 7D) of the second reactor (20) as soon as the weight of said small (3A) and intermediate (3B) solid inorganic product provides the possibility of overcoming the rising flow of the mixture of the first fluid (1) and of the second fluid (2) and the downwardly flowing small (3A) and intermediate (3B) solid inorganic product is conveyed by gravity by sliding along the walls of said second reactor (20) and through at least one transfer conduit (22) towards the bottom of the first reactor (19) in order to end up with a wet and large precipitated solid inorganic final product (3C) being discharged towards the apparatus for separating particles and discharging the secondary remnant (5),
   - at least one conduit (18A) for injecting gas (18) into said first reactor (19).

12. The device according to claim 1, wherein said element X is selected from Cd, Cr, Co, Cu, Eu, Ge, Fe, Pb, Mn, Ni, Pt, Sn, V, Zn, Ti, Si, Po, Hg, Yb, Sm, Md, No.

13. The device according to claim 1, wherein $X^{2+}$ is selected from $Cd^{2+}$, $Cr^{2+}$, $Co^{2+}$, $Cu^{2+}$, $Eu^{2+}$, $Ge^{2+}$, $Fe^{2+}$, $Pb^{2+}$, $Mn^{2+}$, $Ni^{2+}$, $Pt^{2+}$, $Sn^{2+}$, $V^{2+}$, $Zn^{2+}$, $Ti^{2+}$, $Si^{2+}$, $Po^{2+}$, $Hg^{2+}$, $Yb^{2+}$, $Sm^{2+}$, $Md^{2+}$, $No^{2+}$.

14. The device according to claim 1, wherein said first fluid (1) is mixed with said second fluid (2) in the upper portion of said first reactor (19) to form a small (3A) and intermediate (3B) solid inorganic product becoming gradually bigger, before injecting said small (3A) and intermediate (3B) solid inorganic product into the second reactor (20), where the ascent rate of the first fluid (1) mixed with said second fluid (2) is between 0.01 m/s and 3 m/s.

15. The device according to claim 1, wherein said at least one spiral reaction conduit (7A, 7B, 7C, 7D) of the second reactor (20) has a tilt angle (10A) of the turns preferably between 10° and 70°, preferably between 20° and 60°, more preferably between 48° and 55°, the tilt angle (10A) being defined relative to a horizontal axis (10B) substantially parallel to the ground.

16. The device according to claim 1, wherein the second reactor (20) consists of at least one spiral-shaped reaction conduit (7A, 7B, 7C, 7D), for which the number of turns (4) is between 1 and 20, preferably between 4 and 10, more preferably between 4 and 6, relative to the height of the second reactor (20) of elongate shape defining a substantially vertical longitudinal axis (10).

17. The device according to claim 1, wherein the weight of a crystal of the large and dry precipitated solid inorganic final product (3D) is between 0.001 g and 1.5 g, preferably between 0.01 g and 1.0 g, more preferably between 0.1 g and 0.9 g.

18. The device according to claim 1, wherein the size of a crystal of said large and dry precipitated solid inorganic final product (3D) is between 1 mm and 10 mm.

19. **A method** for recovering a precipitated solid inorganic product consisting of phosphorus, nitrogen and an element X selected from the alkaline earth metals Be, Mg, Ca, Sr, Ba, Ra, formed from a first phosphorus- and nitrogen-containing fluid (1) mixed with a second fluid (2) consisting of at least one divalent cation $X^{2+}$ selected from $Be^{2+}$, $Mg^{2+}$, $Ca^{2+}$, $Sr^{2+}$, $Ba^{2+}$, $Ra^{2+}$,
said method operating at a temperature between 20°C and 90°C,
and comprising the following steps:

- A) injecting the first fluid (1) through at least one injection point (9) connected to at least one first reactor (19) for primary reaction-crystallisation,
- B) injecting a gas (18) into said first reactor (19) at least at one injection point (50),
- C) adjusting the pH (40B) by injecting a basic solution,
- D) injecting the second fluid (2) through at least one injection point (8) connected to said first reactor (19) for primary reaction-crystallisation,
- E) growing the crystals of a small (3A) and intermediate (3B) solid inorganic product gradually becoming bigger in said first reactor (19),
- F) increasing the residence time of the crystals of the small (3A) and intermediate (3B) solid inorganic product by transferring part of the first fluid (1), part of the second fluid (2) mixed with the basic solution and part of the crystals of the small (3A) and intermediate (3B) solid inorganic product from the first reactor (19) to a second spiral reactor (20) for secondary crystallisation-decantation,
- G) gravitational migration of the crystals of a wet and large precipitated solid inorganic final product (3C) from the second spiral reactor (20) to the first reactor (19) through a transfer conduit (22) connecting the second reactor (20) to the first reactor (19),
- H) separating the crystals of a wet precipitated solid inorganic final product (3C) and of the secondary remnant (6B) at the at least one apparatus (5) for separating particles and discharging the secondary remnant, said apparatus (5) comprising a first sieve (54) with large meshes in its upper part and a second sieve (55) with small meshes in its lower part in order to separate the wet and large precipitated solid (3C) from the small (3A) and intermediate (3B) solid inorganic product,
- I) drying the crystals of the wet and large precipitated solid inorganic final product (3C).

20. The method according to claim 19, comprising an additional step J) of initiating the crystallisation by injection into the first reactor (19) of a fraction of the small (3A) and intermediate (3B) solid inorganic product by means of at least one initiation channel (17) connecting said apparatus (5) for separating particles and discharging the secondary remnant (6B) to said first reactor (19).

21. The method according to claim 19, comprising an additional step K) of suctioning the gas upper volume of the apparatus (5), wherein at least one conduit (52) for suctioning the gas upper volume of the apparatus (5) connects the apparatus (5) to said apparatus (30) for injecting a gas (18) for promoting the recovery of said small solid inorganic product (3A).

22. The method according to claim 19, wherein in step D) the injection point (8) is located at a height greater than that of a valve (51) which is the highest in height.

23. The method according to claim 19, wherein the gas (18) of step B) is selected from air, biogas, and low-$CO_2$ gas.

24. The method according to claim 19, wherein the pH of step C) reaches a pH between 8 and 11, preferably between 9 and 10.

25. The method according to claim 19, wherein said element X is selected from Cd, Cr, Co, Cu, Eu, Ge, Fe, Pb, Mn, Ni, Pt, Sn, V, Zn, Ti, Si, Po, Hg, Yb, Sm, Md, No.

26. The method according to claim 19, wherein $X^{2+}$ is selected from $Cd^{2+}$, $Cr^{2+}$, $Co^{2+}$, $Cu^{2+}$, $Eu^{2+}$, $Ge^{2+}$, $Fe^{2+}$, $Pb^{2+}$, $Mn^{2+}$, $Ni^{2+}$, $Pt^{2+}$, $Sn^{2+}$, $V^{2+}$, $Zn^{2+}$, $Ti^{2+}$, $Si^{2+}$, $Po^{2+}$, $Hg^{2+}$, $Yb^{2+}$, $Sm^{2+}$, $Md^{2+}$, $No^{2+}$.

FIG. 1

FIG. 2

FIG. 3

FIG. 4

15 A

16 A

41

20

16

40 B

19

FIG. 5

FIG. 6

15A

20

19

FIG. 7

24

FIG. 8

FIG. 9

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2511243 A
- US 20120261338 A1
- US 20130220919 A1

- WO 2012134255 A1
- WO 2012134255 A